Europäisches Patentamt

European Patent Office

Office européen des brevets

(11) Veröffentlichungsnummer: **0 007 610**
**B1**

(12) **EUROPÄISCHE PATENTSCHRIFT**

(45) Veröffentlichungstag der Patentschrift :
21.07.82

(21) Anmeldenummer : 79102606.5

(22) Anmeldetag : 24.07.79

(51) Int. Cl.³ : **C 04 B 11/00, C 01 F 11/46**

(54) **Verfahren zur Verwertung des in Rauchgasentschwefelungsanlagen, die auf Kalkbasis betrieben werden, anfallenden Gipses.**

(30) Priorität : 29.07.78 DE 2833382

(43) Veröffentlichungstag der Anmeldung :
06.02.80 (Patentblatt 80/03)

(45) Bekanntmachung des Hinweises auf die Patenterteilung : 21.07.82 Patentblatt 82/29

(84) Benannte Vertragsstaaten :
BE FR GB IT LU NL SE

(56) Entgegenhaltungen :
DE - A - 2 225 817
DE - A - 2 240 926
DE - A - 2 609 123
DE - A - 2 658 915
DE - C - 1 096 816

(73) Patentinhaber : Saarbergwerke Aktiengesellschaft
Postfach 1030
Trierer Strasse 1 D-6600 Saarbrücken (DE)

(72) Erfinder : Müller, Rudolf, Dipl.-Ing.
Bismarkstrasse 17
D-6605 Friedrichsthal (DE)
Erfinder : Klinkner, Hans-Guido, Dr. Dipl.-Ing.
Grubenweg 20
D-6670 St. Ingbert (DE)
Erfinder : Culmann, Günter
Im Kuhfeld
D-6680 Neunkirchen (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

## Verfahren zur Verwertung des in Rauchgasentschwefelungsanlagen, die auf Kalkbasis betrieben werden, anfallenden Gipses.

Die Erfindung betrifft ein verfahren zur Verwertung des in Rauchgasentschwefelungsanlagen, die auf Kalkbasis betrieben werden, anfallenden Rauchgasentschwefelungsgipses.

Die Rauchgase von Kohle- und auch Ölfeuerungen enthalten eine Reihe von Schadstoffen, insbesondere Schwefeloxide, die, wenn sie in die Atmosphäre gelangen, zu erheblichen Umweltbelastungen führen. Es ist daher erforderlich, die Schadstoffe aus den Rauchgasen abzutrennen.

Zur Abtrennung von Schwefeloxiden sind verschiedene Rauch-gasentschwefelungsverfahren bekannt geworden. Einige davon arbeiten mit einer wässrigen, Calciumionen enthaltenden Waschflüssigkeit, die in Stoffaustausch mit den Rauchgasen gebracht wird. Es entsteht zunächst Calciumsulfit bzw. Calciumbisulfit, welches dann in Gegenwart von Sauerstoff zu Calciumsulfat oxidiert wird. Als Endprodukt der Rauchgasentschwefelunganlage fällt ein wässriger Calcium-sulfatbrei, (Gipsbrei,) an, der zwar umweltfreundlich ist, dessen Ablagerung jedoch Deponieprobleme aufwirft.

Versuche, bei denen der in Rauchgasentschwefelungsanlagen in der Gipsphase « Dihydrat » ($CaSO_4 \cdot 2H_2O$) anfallende Gips zu Halbhydrat ($CaSO_4 \cdot 1/2\,H_2O$) bzw. zu Anhydrit ($CaSO_4$) dehydratisiert und dann mit Wasser abgebunden wurde, zeigten, daß die Festigkeitswerte des abgebundenen Rauchgasentschwefelungsgipses schlechter sind als diejenigen handelsüblicher Naturgipse. Dies gilt sowohl für die Biegezugfestigkeit als auch für die Druckfestigkeit. In erster Linie dürfte dies darauf zurückzuführen sein, daß bei Rauchgasentschwefelungsgipsen die nach DIN 1 168 vom März 1955, Blatt 2, Abschnitt 2.5, ermittelte Einstreumenge kleiner ist als bei Naturgipsen ; bzw. das Wasser : Gips-Verhältnis (W : G) ist bei Rauchgasentschwefelungsgipsen bei sonst vergleichbaren rheologischen Eigenschaften größer als bei handelsüblichen Naturgipsen.

Der Erfindung liegt die Aufgabe zugrunde, ein Verfahren zu entwickeln, das es ermöglicht, den in Rauchgasentschwefelungsanlagen auf Kalkbasis anfallenden Gips einer technisch sinnvollen und auch wirtschaftlichen Verwertung zuzuführen.

Die Aufgabe wird erfindungsgemäß dadurch gelöst, daß der Rauchgasentschwefelungsgips nach seiner teilweisen und/oder vollständigen Dehydratisierung mit dehydratisiertem Naturgips vermischt wird und daß der Anteil des Rauchgasentschwefelungsgipses an der Mischung zwischen 5 und 50 Gew.-%, vorzugsweise zwischen 5 und 30 Gew.-% liegt.

Es hat sich gezeigt, daß eine nach dem erfindungsgemäßen Verfahren hergestellte Gipsmischung aus Naturgips und Rauchgasentschwefelungsgips auch bei einem für die Verarbeitung von Naturgipsen allein üblichen Wasser : Gips-Verhältnis (z.B. W : G = 0,625) noch sehr gut verarbeitbar ist. Dies ist bei der Verarbeitung von Rauchgasentschwefelungsgips allein bei vergleichbaren W : G-Verhältnissen nicht der Fall.

Darüber hinaus liegen, wie sich überraschenderweise gezeigt hat, die Festigkeitswerte von abgebundenen Mischungen aus Naturgips und Rauchgasentschwefelungsgips bei gleichem W : G-Verhältnis sogar noch wesentlich höher als bei Naturgipsen allein, wodurch die Einsatzmöglichkeit von Gipsprodukten in der Bauindustrie oder auch im Bergbau, beispielsweise zum Errichten von Mauern und Dämmen im Untertagebereich oder zum Verfüllen von Hohlräumen, erweitert wird.

Als weiterer Vorteil kommt hinzu, daß auch die Fließeigenschaften eines Gipsbreies durch die Zumischung von Rauchgasentschwefelungsgips positiv beeinfluß werden. Versuche haben gezeigt, daß die bei einem Schergefälle von $D = 22,5\,S^{-1}$ ermittelte Viskosität eines Gipsbreies mit W : G = 0,625 mit zunehmendem Anteil an Rauchgasentschwefelungsgips linear ansteigt. Auch die Anfangsfließgrenze und die Restfließgrenze zeigen ein solches Verhalten.

Durch die Erfindung ist es somit möglich, auch die rheologischen Eigenschaften einer Gipstrübe durch teilweisen Ersatz des Naturgipses durch Rauchgasentschwefelungsgips gezielt zu verändern und somit Produkte herzustellen, die sich beispielsweise gegenüber Naturgipsen auch durch bessere Hafteigenschaften auszeichnen.

Gemäß der Erfindung wird der Rauchgasentschwefelungsgips, der zunächst als Dihydrat (ca. $SO_4 \cdot 2H_2O$) vorliegt, zweckmäßigerweise an Ort und Stelle zu Halbhydrat und/oder Anhydrit dehydratisiert und erst dann dem Naturgips zugemischt. In diesem Falle kann zur Dehydratisierung billige Abwärme aus dem Kraftwerksbereich eingesetzt werden.

Es ist aber auch möglich, daß der Rauchgasentschwefelungsgips dem Naturgips in Form von Dihydrat zugemischt wird, wobei die Dehydratisierung von Naturgips und Rauchgasentschwefelungsgips dann in einer gemeinsamen Anlage erfolgen kann. Auch bei dieser Verfahrensweise liegt der Anteil des Rauchgasentschwefelungsgipses an der Mischung zwischen 5 und 50 Gew.-%, vorzugsweise zwischen 5 und 30 Gew.-%.

Rauchgasentschwefelungsgipskonzentrationen über 50 Gew.-% führen bei einem aus Festigkeitsgründen erforderlichen W : G-Verhältnis kleiner/gleich 0,625 auch unter Zuhilfenahme von Verflüssigern zu Verarbeitungsschwierigkeiten des Gipsproduktes.

Es hat sich als zweckmäßig erwiesen, bei Konzentrationen von über 15 Gew.-% dem Anmachwasser noch zusätzlich einen Verflüssiger zuzugeben. Die Konzentration des Verflüssigers liegt dabei etwa zwischen 1 und 3 Gew.-%.

Weitere Erläuterungen zu der Erfindung sind den in der Tabelle dargestellten Versuchsergebnissen

**0 007 610**

zu entnehmen.

Bei den Versuchen, deren Ergebnisse in der Tabelle dargestellt sind, wurde als Naturgips sogenannter « Saaralit-Bergbaugips D », im wesentlichen ein Halbhydrat, verwendet. Diesem Naturgips wurde ein zum Halbhydrat dehydratisierter Rauchgasentschwefelungsgips zugemischt, der in der Rauchgasentschwefelungsanlage des Kraftwerks Weiher II der Saarbergwerke AG erzeugt wurde.

Die Versuchsergebnisse zeigen, daß sowohl die Biegefestigkeit als auch die Druckfestigkeit, die bei allen Versuchen nach 13 Tagen Lagerung bei 35 °C ermittelt wurde, sprunghaft ansteigt, sobald dem Naturgips eine bestimmte Menge Rauchgasentschwefelungsgips zugemischt wird. Beispielsweise ergibt eine Mischung aus 85 Gew.-% « Bergbaugips D » und 15 Gew.-% « Weiher Halbhydrat bei einem W : G-Verhältnis von 0,625 eine Druckfestigkeit von 92,6 daN/cm². Eine entsprechende hohe Druckfestigkeit ist bei Verwendung von « Bergbaugips D » alleine nur bei einem geringeren W : G-Verhältnis von 0,5 zu zu erreichen, d.h. beispielsweise, daß bei Verwendung von Bergbaugips zur Herstellung von 1 m³ ausgehärteten Gipses etwa 135 kg mehr Gips verwendet werden muß als bei Verwendung einer Mischung aus 85 Gew.-% « Bergbaugips D » und 15 Gew.-% « Weiher-Halbhydrat ».

| Zusammensetzung der Gipsmischung (Gew.-%) | | Wasser : Gipsverhältnis | Gehalt an Verflüssiger im Anmachwasser (Gew.-%) | Feuchtigkeitseigenschaften | |
|---|---|---|---|---|---|
| Bergbaugips D | Weiher-Halbhydrat | | | Biegefestigkeit (da N/cm²) | Druckfestigkeit (da N/cm²) |
| 0 | 100 | 1,00 | 0 | 12,7 | 21,3 |
| 0 | 100 | 1,00 | 2 | 12,7 | 21,3 |
| 0 | 100 | 0,80 | 2 | 13,6 | 22,8 |
| 100 | 0 | 0,625 | 0 | 23,1 | 52,5 |
| 95 | 5 | 0,625 | 0 | 28,0 | 81,1 |
| 90 | 10 | 0,625 | 0 | 30,4 | 86,3 |
| 85 | 15 | 0,625 | 0 | 33,2 | 92,6 |
| 80 | 20 | 0,625 | 2,0 | 35,6 | 100,5 |
| 75 | 25 | 0,625 | 2,0 | 38,4 | 109,3 |
| 70 | 30 | 0,625 | 2,0 | 41,0 | 119,2 |

**Ansprüche**

1. Verfahren zur Verwertung des in Rauchgasentschwefelungsanlagen, die auf Kalkbasis betrieben werden, anfallenden Rauchgasentschwefelungsgipses, dadurch gekennzeichnet, daß der Rauchgasentschwefelungsgips nach seiner teilweisen oder vollständigen Dehydratisierung mit dehydratisiertem Naturgips vermischt wird und daß der Anteil des Rauchgasentschwefelungsgipses an der Mischung zwischen 5 und 50 Gew.-%, vorzugsweise zwischen 5 und 30 Gew.-% liegt.

2. Verfahren zur Verwertung des in Rauchgasentschwefelungsanlagen, die auf Kalkbasis betrieben werden, anfallenden Rauchgasentschwefelungsgipses, dadurch gekennzeichnet, daß der Rauchgasentschwefelungsgips dem Naturgips in Form von Dihydrat zugemischt wird und die Dehydratisierung zu Halbhydrat und/oder Anhydrit zusammen mit der Dehydratisierung des Naturgipses erfolgt und daß der Anteil des Rauchgasentschwefelungsgipses an der Mischung zwischen 5 und 50 Gew.-%, vorzugsweise zwischen 5 und 30 Gew.-% liegt.

**Claims**

1. A process for utilising flue gas desulphurization gypsum occuring in flue gas desulphurization plants which are operated on a calcium basis, characterised in that, after partial or complete dehydration, the flue gas desulphurization gypsum is mixed with dehydrated natural gypsum, and that the flue gas desulphurization gypsum component in the mixture is between 5 and 50 % by weight, preferably between 5 and 30 % by weight.

2. A process for utilising flue gas desulphurization gypsum occuring in flue gas desulphurization plants which are operated on a calcium basis, characterised in that the flue gas desulphurization gypsum is added to the natural gypsum in the form of dihydrate and the dehydration to semihydrate and/or anhydrate takes place simultaneously with the dehydration of the natural gypsum ; and that the flue gas desulphurization gypsum component in the mixture is between 5 and 50 % by weight, preferably between 5 and 30 % by weight.

3

**Revendications**

1. Procédé pour l'utilisation du gypse de désulfuration des gaz de fumée produits dans les installations de désulfuration des gaz de fumée fonctionnant à base de chaux, procédé caractérisé en ce que le gypse de désulfuration de gaz de fumée est mélangé, après sa déshydratation partielle ou totale, avec du gypse déshydraté naturel dans une proportion comprise entre 5 et 50 % en poids, et notamment comprise entre 5 et 30 % en poids du mélange.

2. Procédé pour l'utilisation du gypse de désulfuration des gaz de fumée produits dans les installations de désulfuration des gaz de fumée fonctionnant à base de chaux, procédé caractérisé en ce que le gypse de désulfuration de gaz de fumée est mélangé au gypse naturel sous forme de dihydrate, et que la déshydratation en semi-hydrate et/ou en anhydride s'effectue en commun avec la déshydratation du gypse naturel, et que la proportion de gypse de désulfuration des gaz de fumée est comprise entre 5 et 50 % en poids, et notamment comprise entre 5 et 30 % en poids du mélange.